# EUROPÄISCHE PATENTSCHRIFT

(11) **EP 2 107 086 B1**
(45) Veröffentlichungstag und Bekanntmachung des Hinweises auf die Patenterteilung: **02.05.2012**
(21) Anmeldenummer: 08103321.9
(22) Anmeldetag: 02.04.2008
(51) Int. Cl.: C09C 1/30, B01F 17/14, C09D 7/12, C09D 5/02

(54) **Dispersion enthaltend hydrophobierte Siliciumdioxidpartikel**
Dispersion containing hydrophobic silicon dioxide particles
Dispersion comprenant des particules de dioxyde de silicium hydrophobes

(43) Veröffentlichungstag der Anmeldung: 07.10.2009
(73) Patentinhaber: Evonik Degussa GmbH, 45128 Essen (DE)
(72) Erfinder: Lortz, Wolfgang, Dr., 63607 Wächtersbach (DE); Perlet, Gabriele, 63538 Grosskrotzenburg (DE); Diener, Uwe, 63538 Grosskrotzenburg (DE); Reitz, Sascha, 63456 Hanau (DE)

(56) Entgegenhaltungen:
- DE-A1- 10 316 661
- DE-A1-102006 020 987
- US-A- 5 856 379

## Beschreibung

Die Erfindung betrifft eine wässerige Dispersion, welche hydrophobierte Siliciumdioxidpartikel enthält, deren Herstellung und Verwendung. Die Erfindung betrifft weiterhin eine Zubereitung, welche hydrophobierte Siliciumdioxidpartikel enthält, deren Herstellung und Verwendung.

Wichtige Punkte bei der Herstellung von Dispersionen sind:
- eine gute Benetzung der Füllstoffe und Pigmente während der Einarbeitung. Dadurch können die Dispergierzeiten und der Eintrag an Dispergierenergie reduziert werden;
- oftmals ist eine möglichst geringe Viskosität der Dispersionen erwünscht;
- nach Abtrocknung soll ein hoher Glanzgrad erzielt werden;
- die Absetzneigung der festen Phase der Dispersion soll minimal sein, auch bei Langzeitlagerung, Transport über große Entfernungen und bei extremer klimatischer Belastung;
- es soll keine Flokkulation in der Dispersion auftreten. Dies ist von besonderer Bedeutung bei der Herstellung reproduzierbarer Farbtöne bei Verwendung von heute üblichen Farbmischmaschinen;
- die Dispersion soll mit einer Vielzahl von Additiven verträglich sein.

Um diesen Punkten gerecht zu werden, werden in der Regel Dispergiermittel der Dispersion zugesetzt. Dazu wurden bereits eine Vielzahl von wasserlöslichen Dispergiermitteln vorgeschlagen. Beispielsweise Dispergiermittel auf Basis preiswerter, ionischer Strukturen, wie Polyphosphate (Ullmann's Encyclopedia of Industrial Chemistry, Sixth Edition, Point 3.2.6., 2002; Th. Staffel, Farbe & Lack 100, 1994) und Polyacrylsäuren (WO-A-02/14415, WO-A-01/60925, J. Schröder, Farbe & Lack 91, 1985, 11; R. Hildred, Farbe & Lack, 1990, 857-859) oder amphiphilen Strukturen, das heißt mit definierten hydrophoben und hydrophilen Blöcken, auf Basis von nichtionischen Fettalkohol- oder Alkylphenolethoxylaten bzw. deren anionisch modifizierten Derivaten.

Dennoch sind bislang nur wenige hochgefüllte, niedrigviskose, stabile wässerige Dispersionen bekannt, die hydrophobierte Siliciumdioxidpartikel enthalten. Hochgefüllte Dispersionen sind erwünscht, weil dadurch die Transportkosten gesenkt werden können und weil bei der Einarbeitung in hochgefüllte Lackdispersionen, diese nicht wieder mit stark wasserhaltigen Produkten verdünnt werden sollen.

In DE-A-10316661 wird eine hochgefüllte, niedrigviskose Dispersion offenbart, die 5 bis 50 Gew.-% hydrophobierte Siliciumdioxidpartikel und ein Dispergiermittel der allgemeinen Formel R¹-COO-(CH₂-CH(Ph)-O)ₐ - (CₙH₂ₙ-ₓR²ₓ-O)_{b}-R³ enthält. Diese Dispersion führt in der Anwendung jedoch nur zu nur mäßig dauerhaften Beschichtungen.

Aufgabe der Erfindung ist es daher, eine niedrigviskose Dispersion mit einem hohen Anteil an hydrophobierten Siliciumdioxidpartikeln bereitzustellen, die eine hohe Stabilität aufweist und nach Einarbeitung zu wässrigen Formulierungen wieder eine deutliche Strukturviskosität aufbaut.

Gegenstand der Erfindung ist eine wässerige Dispersion, welche hydrophobierte Siliciumdioxidpartikel und jeweils ein oder mehrere Dispergieradditiv, eine basisch wirkende Zusammensetzung enthält und die frei von Farbpigmenten, inaktiven Füllstoffen und Bindemitteln ist, dadurch gekennzeichnet, dass
- die hydrophobierten Siliciumdioxidpartikel eine Methanolbenetzbarkeit von 30 bis 60, bevorzugt 35 bis 55, aufweisen und mit einem Anteil von 0,1 bis 50 Gew.-%, bevorzugt 10 bis 30, in der Dispersion vorliegen,
- der Anteil an Wasser 30 bis 90 Gew.-%, bevorzugt 50 bis 70 Gew.-%, jeweils bezogen auf die Dispersion, beträgt,
- das Dispergieradditiv wenigstens ein Phosphatester eines ethoxylierten Alkoholes mit 8 bis 18 Kohlenstoffatomen ist, dessen Anteil 3 bis 25 Gew.-%, bevorzugt 6 bis 20 Gew.-% und besonders bevorzugt 9 bis 16 Gew.-%, jeweils bezogen auf den Anteil der hydrophobierten Siliciumdioxidpartikeln beträgt,
- die basisch wirkende Zusammensetzung ein oder mehrere Amine der allgemeinen Formel RNH₂, R₂NH und R₃N enthält oder aus diesen besteht, wobei R für eine Alkylgruppe oder eine hydroxylsubstituierte Alkylgruppe mit 2 bis 10 Kohlenstoffatomen steht, die substituiert oder unsubstituiert, linear oder verzweigt, nichtcyclische oder cyclische sein kann, und mit einem Anteil von 5 bis 30 Gew.-%, bevorzugt 10 bis 20 Gew.-% und ganz besonders bevorzugt 12,5 bis 17,5 Gew.-%, jeweils bezogen auf den Anteil an hydrophobierten Siliciumdioxidpartikeln, vorliegt,
- die Dispersion weiterhin ein oder mehrere Polyole mit 2 bis 15 Kohlenstoffatomen enthält, deren Anteil 1 bis 10 Gew.-%, bevorzugt 3 bis 7 Gew.-%, jeweils bezogen auf den Anteil an hydrophobierten Siliciumdioxidpartikeln, beträgt,
- wobei der Phosphatester, die basisch wirkende Zusammensetzung und das Polyol in der wässerigen Phase der Dispersion löslich sind und
- der pH-Wert der Dispersion 9 bis 11 beträgt.

Unter einer wässerigen Dispersion soll eine Dispersion verstanden werden, die mehr als 50 Gew.-% Wasser, in der Regel mehr als 70 Gew.-% Wasser, bezogen auf die flüssige Phase der Dispersion enthält.

Es wurde gefunden, dass an die in der erfindungsgemäßen Dispersion eingesetzten hydrophobierten Siliciumdioxidpartikel Bedingungen bezüglich deren Grad an Hydrophobie eingehalten werden müssen. Ist die Hydrophobie der Siliciumdioxidpartikel zu hoch oder zu niedrig, so hat dies negative Auswirkungen auf die Stabilität der erfindungsgemäßen Dispersion. Ein geeignetes Maß für die Hydrophobie ist die Methanolbenetzbarkeit.

Bei der Bestimmung der Methanolbenetzbarkeit werden in transparente Zentrifugenröhrchen jeweils 0,2 g (± 0,005 g) hydrophobe Siliciumdioxidpartikel eingewogen. Es werden zu jeder Einwaage 8,0 ml eines Methanol/Wasser Gemisches mit jeweils 10, 20, 30, 40, 50, 60, 70 und 80 Vol.-% Methanol zugegeben. Die verschlossenen Röhrchen werden 30 Sekunden geschüttelt und anschließend 5 Minuten bei 2500 min⁻¹ zentrifugiert. Die Sedimentvolumina werden abgelesen, in Prozent umgerechnet und graphisch gegen den Methanolgehalt (von.-%) aufgetragen. Der Wendepunkt der Kurve entspricht der Methanolbenetzbarkeit. Je höher die Methanolbenetzbarkeit desto größer ist die Hydrophobie der Siliciumdioxidpartikel.

Bei der erfindungsgemäßen Dispersion beträgt die Methanolbenetzbarkeit 30 bis 60. Geeignete kommerzielle erhältliche hydrophobierte Siliciumdioxidpartikel, die diese Bedingung erfüllen sind beispielsweise AEROSIL^{®} R972, AEROSIL^{®} R974, AEROSIL^{®} R104, AEROSIL^{®} R106 und AEROSIL^{®} R9200, alle Evonik Degussa.

Bevorzugterweise können die hydrophobierten Siliciumdioxidpartikel durch Hydrophobierung pyrogen hergestellter Siliciumdioxidpartikel erhalten werden. Unter pyrogen sind durch Flammhydrolyse oder Flammoxidation hergestellte Partikel zu verstehen. Pyrogene Siliciumdioxidpartikel sind beispielsweise in Ullmann's Encyclopedia of Industrial Chemistry, Vol. A23, Seite 635, 5. Auflage beschrieben. Diese Partikel liegen in der Regel in Form aggregierter Primärpartikel auf und weisen auf ihrer Oberfläche reaktive Zentren auf, die mit einem Hydrophobierungsmittel reagieren können. Die für die erfindungsgemäße Dispersion eingesetzten hydrophobierten Siliciumdioxidpartikel weisen bevorzugt eine BET-Oberfläche von 50 bis 300 m²/g, besonders bevorzugt eine von 70 bis 200 m²/g und ganz besonders bevorzugt eine von 90 bis 150 m²/g auf.

Weiterhin hat es sich als vorteilhaft erwiesen, wenn die hydrophobierten Siliciumdioxidpartikel in der erfindungsgemäßen Dispersion eine mittlere Partikelgröße (Medianwert) von 200 nm oder weniger aufweisen. Besonders bevorzugt ist ein Bereich von 100 bis 200 nm.

Ein weiterer wesentlicher Bestandteil der erfindungsgemäßen Dispersion ist wenigstens ein Phosphatester eines ethoxylierten Alkoholes, der 8 bis 18 Kohlenstoffatome enthält. Bevorzugt enthält die Dispersion einen mono-, di- und/oder trisubstituierten Phosphatester eines ethoxylierten, primären Alkoholes mit einer, zwei oder drei linearen C₁₂-C₁₄-Kohlenstoffketten.

Weiterhin enthält die erfindungsgemäße Dispersion eine basisch wirkende Zusammensetzung, die ein oder mehrere Amine der allgemeinen Formel RNH₂, R₂NH und R₃N enthält oder aus diesen besteht. Bevorzugt besteht die basisch wirkende Zusammensetzung aus einem oder mehreren Aminen der allgemeinen Formel RNH₂, R₂NH und R₃N. Diese ist vorzugsweise ein primäres, sekundäres oder tertiäres Amin oder ein Aminoalkohol mit jeweils 2 bis 10 Kohlenstoffatomen. Geeignete Verbindungen sind beispielsweise Monoethanolamin, Diethanolamin, Triethanolamin, Monoisopropanolamin, Diisopropanolamin, Triisopropanolamin, N,N-Dimethylisopropanolamin, 3-Amino-1-propanol, 1-Amino-2-propanol, 2-Amino-2-methyl-1-propanol, 2-Pyrrolidon, N-Methyl-2-pyrrolidon, N-Ethyl-pyrrolidon, N-Vinyl-pyrrolidon, 1,3-Dimethyl-imidazolidon und Piperidin.

Besonders bevorzugt ist eine erfindungsgemäße Dispersion, die N,N-Dimethylethanolamin (Me₂N(CH₂)₂OH)enthält.

Ein weiterer wesentlicher Bestandteil der erfindungsgemäßen Dispersion ist ein Polyol, welches 2 bis 15 Kohlenstoffatome enthält. Vorzugsweise wird das Polyol ausgewählt aus der Gruppe umfassend Ethylenglykol, Propylenglykol, Butylenglykol, Diethylenglykol, Triethylenglykol, Tripropylenglykol, Trimethylolpropan, Pentaerythit, Neopentylglykol, Glycerin, Diethylenglykolmonomethylether, Diethylenglykolmonoethylether, Diethylenglykolmonobutylether, Dipropylenglykolmonoethylether, Acetylenglykolen, wie 2,4,7,9-Tetramethyldec-5-in-4,7-diol oder Acetylenglykolderivaten.

Bevorzugt kann die erfindungsgemäße Dispersion Tripropylenglykol, 2,4,7,9-Tetramethyldec-5-in-4,7-diol oder eine Mischung der beiden enthalten.

Die erfindungsgemäße, wässerige Dispersion kann weiterhin N-Methyl-2-pyrrolidon enthalten. Der Anteil an N-Methyl-2-pyrrolidon beträgt bevorzugt 1 bis 20 Gew.-%, bezogen auf den Anteil an hydrophobierten Siliciumdioxidpartikeln.

Weiterhin kann eine wässerige Dispersion vorteilhaft sein, die N,N-Dimethylethanolamin und 1-Methyl-2-pyrrolidon enthält.

Die erfindungsgemäße Dispersion kann weiterhin ein oder mehrere, vorzugsweise silikonfreie, Entschäumungsmittel enthalten. Deren Anteil beträgt bevorzugt 0,5 bis 5 Gew.-%, und besonders bevorzugt 1 bis 3 Gew.-%, jeweils bezogen auf den Anteil an hydrophobierten Siliciumdioxidpartikeln.

Als besonders vorteilhaft hat sich eine erfindungsgemäße Dispersion erwiesen, die
- einen pH-Wert von 9 bis 11 aufweist und
- 10 bis 30 Gew.-%, bezogen auf die Dispersion, hydrophobe Siliciumdioxidpartikel
   - mit einer Methanolbenetzbarkeit von 40 bis 50,
   - mit einer BET-Oberfläche von 90 bis 150 m2/g,
- 9 bis 16 Gew.-%, bezogen auf den Anteil an hydrophobierten Siliciumdioxidpartikeln, eines mono-, di- und/oder trisubstituierten Phosphatesters eines ethoxylierten, primären Alkoholes mit einer, zwei oder drei linearen C₁₂-C₁₄-Kohlenstoffketten,
- 5 bis 20 Gew.-%, bezogen auf den Anteil an hydrophobierten Siliciumdioxidpartikeln, N,N-Dimethylethanolamin,
- 10 bis 20 Gew.-%, bezogen auf den Anteil an hydrophobierten Siliciumdioxidpartikeln, 1-Methyl-2-pyrrolidon,
- 3 bis 7 Gew.-% Tripropylenglykol und 0,5 bis 1,5 Gew.-% 2,4,7,9-Tetramethyldec-5-in-4,7-diol, jeweils bezogen auf den Anteil an hydrophobierten Siliciumdioxidpartikeln,
- 1 bis 3 Gew.-%, bezogen auf den Anteil an hydrophobierten Siliciumdioxidpartikeln, eines oder mehrerer Entschäumungsmittel
- und 40 bis 70 Gew.-% Wasser, bezogen auf die Dispersion, enthält.

Als Dispergiervorrichtung zur Herstellung der erfindungsgemäßen wässerigen Dispersion eignet sich jede Vorrichtung, die in der Lage ist eine intensive Benetzung des hydrophoben Pulvers mit der wässerigen Phase zu ermöglichen. In der Lackindustrie werden hierzu gerne Dissolver verwendet, deren relativ einfacher Aufbau eine wartungsarme und leicht zu reinigende Produktionsweise ermöglicht. Je nach geforderter Viskosität oder auch Füllgrad der zu erzeugenden wässrigen Dispersion hydrophober pyrogener Kieselsäure ist jedoch noch ein intensives Dispergieren oder Nachvermahlen notwendig. Das Nachvermahlen kann beispielsweise in Rührwerkskugelmühlen erfolgen. Vielfach reicht jedoch eine intensive Scherung mit Hilfe von Rotor/Stator-Maschinen aus. Eine zweckdienliche Kombination aus Benetzung- und Dispergiermöglichkeit stellen die Rotor/Stator-Maschinen der Firma Ystral, die es ermöglichen, das Pulver einzusaugen und nach dem Schließen der Pulver-Einsaugöffnung intensiv scherend zu dispergieren. Insbesondere beim Einsatz von Rotor/Stator-Maschinen, bei denen es zum Einsaugen von Luft und daher zu Schaumbildung kommen kann, hat es sich als vorteilhaft erwiesen, nur einen Teil des benötigten Wassers vorzulegen und einen Teil des hydrophoben Siliciumdioxides einzuarbeiten. Ab einer bestimmten Menge hydrophoben Siliciumdioxides, ca. 25 Gew.-%, bezogen auf das insgesamt einzuarbeitende hydrophobe Siliciumdioxid, ist dessen entschäumende Wirkung festzustellen. Erst anschließend werden die noch fehlenden Anteile Wasser, hydrophobes Siliciumdioxid und die weiteren Bestandteile der Dispersion hinzugegeben.

Ein weiterer Gegenstand der Erfindung ist eine Zubereitung, welche hydrophobierte Siliciumdioxidpartikel, ein oder mehrere Bindemittel, ein oder mehrere Dispergieradditive und eine basisch wirkende Zusammensetzung enthält, bei der
- die hydrophobierten Siliciumdioxidpartikel eine Methanolbenetzbarkeit von 30 bis 60, bevorzugt 35 bis 55, und mit einem Anteil von 0,05 bis 5 Gew.-% in der Zubereitung vorliegen,
- das Dispergieradditiv wenigstens ein Phosphatester eines ethoxylierten Alkoholes mit 8 bis 18 Kohlenstoffatomen ist, dessen Anteil 3 bis 25 Gew.-%, bevorzugt 6 bis 20 Gew.-% und besonders bevorzugt 9 bis 16 Gew.-%, jeweils bezogen auf den Anteil der hydrophobierten Siliciumdioxidpartikeln beträgt,
- die basisch wirkende Zusammensetzung ein oder mehrere Amine der allgemeinen Formel RNH₂, R₂NH und R₃N enthält oder aus diesen besteht, wobei R für eine Alkylgruppe oder eine hydroxylsubstituierte Alkylgruppe mit 2 bis 10 Kohlenstoffatomen steht, die substituiert oder unsubstituiert, linear oder verzweigt, nichtcyclische oder cyclische sein kann, und mit einem Anteil von 5 bis 30 Gew.-%, bevorzugt 10 bis 20 Gew.-% und ganz besonders bevorzugt 12,5 bis 17,5 Gew.-%, jeweils bezogen auf den Anteil an hydrophobierten Siliciumdioxidpartikeln, vorliegt,
- die Dispersion weiterhin ein oder mehrere Polyole mit 2 bis 15 Kohlenstoffatomen enthält, deren Anteil 1 bis 10 Gew.-%, bevorzugt 3 bis 7 Gew.-%, jeweils bezogen auf den Anteil an hydrophobierten Siliciumdioxidpartikeln, beträgt, und
- der pH-Wert der Zubereitung kleiner als 9, bevorzugt 8 bis 8,9 ist.

Geeignete Bindemittel können, die in der Lack- und Beschichtungstechnologie üblichen Harze, wie sie zum Beispiel in "Lackharze, Chemie, Eigenschaften und Anwendungen, Hrsg. D. Stoye, W. Freitag, Hanser Verlag, München, Wien 1996", beschrieben sind, sein.

Beispielhaft zu nennen sind u.a. die Polymerisate und Copolymerisate der (Meth)acrylsäure und deren gegebenenfalls weitere funktionelle Gruppen tragenden Ester mit weiteren olefinisch ungesättigten Verbindungen, wie zum Beispiel Styrol, Polyetherpolyole, Polyesterpolyole, Polycarbonatpolyole, Polyurethanpolyole und Epoxidharze sowie auch beliebige Mischungen dieser Polymeren, sowie durch Polykondensation hergestellte fettsäuremodifizierte "Alkydharze" wie sie in Ullmann, 3. Auflage, Band 11, Seite 334 ff. beschrieben werden.

Weiterhin können als Polymerkomponenten organische, Hydroxylgruppen tragende Verbindungen eingesetzt werden, zum Beispiel Polyacrylat-, Polyester-, Polycaprolacton-, Polyether-, Polycarbonat-, Polyurethanpolyole und hydroxyfunktionelle Epoxidharze sowie beliebige Mischungen dieser Polymeren eingesetzt werden. Insbesondere wässrige oder lösemittelhaltige bzw. lösemittelfreie Polyacrylat- und Polyesterpolyole sowie deren beliebige Mischungen eingesetzt.

Polyacrylatpolyole sind Copolymerisate von u.a. Hydroxylgruppen aufweisenden Monomeren mit anderen olefinisch ungesättigten Monomeren, wie zum Beispiel Ester der (Meth)acrylsäure, Styrol-, alpha-Methylstyrol, Vinyltoluol, Vinylester, Malein- und Fumarsäuremono- und -dialkylester, alpha-Olefine und weiteren ungesättigten Oligomeren und Polymeren.

Die erfindungsgemäße Zubereitung kann weiterhin Farbpigmente und/oder inaktive Füllstoffe enthalten.

Die Farbpigmente können organischer oder anorganischer Natur sein. Beispielhaft seien Bariumsulfat, Bleioxide, Bleisilikate, Eisenoxide, Phthalocyaninkomplexe, Titandioxide, Zinkoxide und Zinksulfid genannt.

Die erfindungsgemäße Zubereitung kann weiterhin inaktive Füllstoffe enthalten. Unter inaktiven Füllstoffen sind dem Fachmann bekannte Füllstoffe zu verstehen, die die rheologischen Eigenschaften der Zubereitung nicht oder nur unwesentlich beeinflussen. Beispielhaft seien Calciumcarbonat, Diatomeenerde, Glimmer, Kaolin, Kreide, Quarz und Talkum genannt.

Farbpigmente und/oder inaktive Füllstoffe liegen üblicherweise in Anteilen von in Summe 10 bis 70 Gew.-%, bevorzugt 30 bis 50 Gew.-%, bezogen auf den Gesamtfestkörperanteil der Zubereitung, vor.

Der Gesamtfestkörperanteil der Zubereitung, der sich aus hydrophobiertem Siliciumdioxidpartikeln, Bindemittel und gegebenenfalls Farbpigmenten und inaktiven Füllstoffen zusammensetzt, beträgt vorzugsweise 40 bis 60 Gel.-%, bezogen auf die Zubereitung.

Ein weiterer Gegenstand der Erfindung ist ein Verfahren zur Herstellung der Zubereitung, bei dem man die erfindungsgemäße, wässerige Dispersion einsetzt.

Ein weiterer Gegenstand der Erfindung ist die Verwendung der erfindungsgemäßen wässerigen Dispersion oder der erfindungsgemäßen Zubereitung als Zusatz zu Hydrofüllern in der Automobilindustrie, als Beschichtungsbestandteil in Can- und Coil-coating-Verfahren, als Additiv in wasserbasierenden UV-härtbaren Formulierungen z.B. für den Holzschutz und als Bestandteil von Lackschutzfolien.

### Beispiele

Beispiel 1 (gemäß Erfindung) : Zu 21,19 kg Wasser wurden unter Rühren 6,36 kg Hydropalat^{®} 7003, Fa. Cognis, 1,27 kg Dimethylethanolamin (DMEA), 0,19 kg BYK^{®} 011, Fa. Byk Chemie, 0,19 kg Surfynol^{®} 104, Fa. Air Products, 1,91 kg 1-Methyl-2-pyrrolidon und 0,63 kg Tripropylenglycol eingetragen.

Nach dem Durchmischen wurde mit dem Einsaugen der hydrophobierten Siliciumdioxidpartikel mit Hilfe einer Rotor-Stator-Maschine vom Typ Conti TDS 3 begonnen. Nach ca. 30 Minuten waren 12,80 kg AEROSIL^{®} R972, Fa. Evonik Degussa eingesaugt. Jetzt wurde noch 30 Minuten nachgeschert und nachfolgend mit 16,15 Kg VE-Wasser verdünnt.

Es wurde eine Dispersion mit einem Anteil an hydrophobierten Siliciumdioxidpartikeln von 21 Gew.-% erhalten. Der pH-Wert der Dispersion beträgt 10. Dieser wurde unter Hinzufügen von Salzsäure (1 M) auf Werte bis 4 eingestellt.

Diese Dispersion ist D1.

Beispiel 2 (gemäß Erfindung) : In einem doppelwandigen Dispergierbehälter werden 312,5 g VE-Wasser, 100,0 g Hydropalat^{®} 7003, 6,0 g DMEA, 3,0 g BYK^{®} 011, 3,0 g Surfynol^{®} 104 E, 30,0 g 1-Methyl-2-pyrrolidon und 10,0 g Tripropylenglycol vorgelegt und mit Hilfe eines Labordissolvers DISPERMAT^{®} Dissolver der Firma VMA-GETZMANN GMBH (Zahnscheibe mit 70 mm Durchmesser) bei 200 Umdrehungen pro Minute gemischt. Nun wurde portionsweise AEROSIL^{®} R972 hinzugegeben und bei 2400 Umdrehungen pro Minute dispergiert. Nach ca. 80 g AEROSIL^{®} R972 wird weiteres AEROSIL^{®} R972 im Wechsel mit weiterem Wasser (insgesamt 339,5 Wasser) zugegeben. Bei 170 g AEROSIL^{®} R972 war die gesamte Wassermenge zugegeben. Nun werden weitere 30 g AEROSIL^{®} R972 und 6 g DMEA im Wechsel in die Dispersion eingearbeitet. Insgesamt wurden 200 g AEROSIL^{®} R972 eingearbeitet (20 prozentige Dispersion). Anschließend wird noch weitere 15 min mit dem Dissolver bei 2400 Umdrehungen pro Minute dispergiert. Um eine gute Dispergierung des AEROSILs zu erreichen wird abschließend 30 min mit Hilfe eines Ultra Turrax (Rotor/Stator-Dispergieraggregat vom Typ Ultra-Turrax T 50 der Firma IKA-WERKE mit dem Dispergierwerkzeug S50N - G45G) bei 7000 Umdrehungen pro Minute dispergiert. Hierbei wird mit Wasser der doppelwandigen Dispergierbehälter gekühlt so dass die Temperatur bei ca. 30°C liegt.

Der pH-Wert der Dispersion beträgt 10,2, die Viskosität 82 mPas bei 10 s⁻¹ und 72 mPas bei 100 s⁻¹ (alle in den Beispielen angegebenen Viskositätswerte beziehen sich auf eine Temperatur von 23°C).

Beispiel 3 (gemäß Erfindung) : In einem doppelwandigen Dispergierbehälter werden 312,5 g VE-Wasser, 100,0 g Hydropalat^{®} 7003, 6,0 g DMEA, 3,0 g BYK^{®} 011, 3,0 g Surfynol^{®} 104 E, 30,0 g 1-Methyl-2-pyrrolidon und 10,0 g Tripropylenglycol vorgelegt und mit Hilfe eines Labordissolvers DISPERMAT^{®} Dissolver der Firma VMA-GETZMANN GMBH (Zahnscheibe mit 70 mm Durchmesser) bei 200 Umdrehungen pro Minute gemischt. Nun wurde portionsweise AEROSIL^{®} R974 hinzugegeben und bei 2400 Umdrehungen pro Minute dispergiert. Nach ca. 70 g AEROSIL^{®} R974 wird weiteres AEROSIL^{®} R974 im Wechsel mit weiterem Wasser (insgesamt 339,5 Wasser) zugegeben. Bei 170 g AEROSIL^{®} R974 war die gesamte Wassermenge zugegeben. Nun werden weitere 30 g AEROSIL^{®} R974 und 6 g DMEA im Wechsel in die Dispersion eingearbeitet. Anschließend wird noch weitere 15 min mit dem Dissolver bei 2400 Umdrehungen pro Minute dispergiert. Um eine gute Dispergierung des AEROSILs zu erreichen wird abschließend 30 min mit Hilfe eines Ultra Turrax (Rotor/Stator-Dispergieraggregat vom Typ Ultra-Turrax T 50 der Firma IKA-WERKE mit dem Dispergierwerkzeug S50N - G45G) bei 7000 Umdrehungen pro Minute dispergiert. Hierbei wird mit Wasser der doppelwandigen Dispergierbehälter gekühlt so dass die Temperatur bei ca. 30°C liegt.

Der pH-Wert der Dispersion beträgt 10,1, die Viskosität 1036 mPas bei 10 s⁻¹ und 390 mPas bei 100 s⁻¹.

Beispiel 4 (Vergleich) : In einem doppelwandigen Dispergierbehälter werden 312,5 g VE-Wasser, 100,0 g Hydropalat^{®} 7003, 6,0 g DMEA, 3,0 g BYK^{®} 011, 3,0 g Surfynol^{®} 104 E, 30,0 g 1-Methyl-2-pyrrolidon und 10,0 g Tripropylenglycol vorgelegt und mit Hilfe eines Labordissolvers DISPERMAT® Dissolver der Firma VMA-GETZMANN GMBH (Zahnscheibe mit 70 mm Durchmesser) bei 200 Umdrehungen pro Minute gemischt. Nun wurde portionsweise AEROSIL^{®} R202 hinzugegeben und bei 2400 Umdrehungen pro Minute dispergiert. Das Pulver benetzt sehr schlecht und wird nur schlecht eindispergiert. Bereits nach 44 g (9 Gew.-%) wurde die Dispersion sehr viskos und es konnte kein weiteres AEROSIL^{®} R202 eingearbeitet werden.

Beispiel 5 (Vergleich) : In einem doppelwandigen Dispergierbehälter werden 312,5 g VE-Wasser, 6 ,0 g DMEA, 3,0 g BYK^{®} 011, 3,0 g Surfynol^{®} 104 E, 30,0 g 1-Methyl-2-pyrrolidon und 10,0 g Tripropylenglycol vorgelegt und mit Hilfe eines Labordissolvers DISPERMAT® Dissolver der Firma VMA-GETZMANN GMBH (Zahnscheibe mit 70 mm Durchmesser) bei 200 Umdrehungen pro Minute gemischt. Nun wurde portionsweise AEROSIL^{®} R972 hinzugegeben und bei 2400 Umdrehungen pro Minute dispergiert. Das Pulver benetzt sehr schlecht und wird nur schlecht eindispergiert. Bereits nach 40 g (10 Gew.%) wurde die Dispersion sehr viskos.

Auch die Zugabe von weiterem Wasser (104 g) brachte keine wesentliche Verbesserung; es konnten nur weitere 6 g AEROSIL^{®} R972 eindispergiert werden. Auch weitere Zugabe von 2,8 DMEA brachte keine Verbesserung.

Beispiel 6 (Vergleich) : In einem doppelwandigen Dispergierbehälter werden 312,5 g VE-Wasser, 100,0 g Hydropalat^{®} 7003, 6,0 g DMEA, 3,0 g BYK^{®} 011, 3,0 g Surfynol^{®} 104 E, und 30,0 g 1-Methyl-2-pyrrolidon vorgelegt und mit Hilfe eines Labordissolvers DISPERMAT® Dissolver der Firma VMA-GETZMANN GMBH (Zahnscheibe mit 70 mm Durchmesser) bei 200 Umdrehungen pro Minute gemischt. Nun wurde portionsweise AEROSIL^{®} R972 hinzugegeben und bei 2400 Umdrehungen pro Minute dispergiert. Nach ca. 80 g AEROSIL^{®} R972 wird weiteres AEROSIL^{®} R972 im Wechsel mit weiterem Wasser (insgesamt 339,5 g Wasser) zugegeben. Bei 160 g AEROSIL^{®} R972 war die gesamte Wassermenge zugegeben. Nun werden weitere 40 g AEROSIL^{®} R972 und 6 g DMEA im Wechsel in die Dispersion eingearbeitet. Insgesamt wurden 200 g AEROSIL^{®} R972 eingearbeitet (20%ige Dispersion).

Anschließend wird noch weitere 15 min mit dem Dissolver bei 2400 Umdrehungen pro Minute dispergiert. Um eine gute Dispergierung des AEROSILes zu erreichen wird abschließend 30 min mit Hilfe eines Ultra Turrax (Rotor/Stator-Dispergieraggregat vom Typ Ultra-Turrax T 50 der Firma IKA-WERKE mit dem Dispergierwerkzeug S50N - G45G) bei 7000 Umdrehungen pro Minute dispergiert. Hierbei wird mit Wasser der doppelwandigen Dispergierbehälter gekühlt so dass die Temperatur bei ca. 30°C liegt. Der pH-Wert der Dispersion beträgt 10,1, die Viskosität 69 mPas bei 10 s⁻¹ und 57 mPas bei 100 s^{-l}.

Die Dispersion lässt sich auch durch Behandlung mit Ultraschall schlecht entlüften und ist daher für Anwendungen im Bereich Farben und Lacke nur schlecht geeignet.

Beispiel 7 (Vergleich) : 100 g AEROSIL^{®} R972 werden mittels eines Dissolvers bei einer Einstellung von ca. 2500 U/min portionsweise in 192,5 g VE-Wasser, 88 g eine Gemisches des Dispergiermittels C₁₈H₃₇-COO-(C₂H₄O)₁₀₀H und des Aminoxid enthaltenden Maleinsäureanhydrid-Copoylmeren aus Beispiel 1, EP-A-1026178, in einem Mischungsverhältnis von 85:15, als 40 prozentige Lösung in Wasser und 7,5 g Tego Foamex^{®} 810, Degussa AG eingearbeitet. Dabei wird mit insgesamt 1,79 g 90 prozentiger 2-Amino-2-Methyl-1-Propanol-Lösung der pH-Wert bei 10 gehalten. Nach Zugabe der restlichen 110,21 g voll entsalztes Wasser wird mit 3000 U/min für 15 Minuten weiter homogenisiert. Die eigentliche Dispergierung erfolgt anschließend mit Hilfe eines Ultra Turrax bei 7000 U/min für 30 Minuten.

d₅₀(v) beträgt 193 nm, die Viskosität bei 10 s⁻¹ 310 mPas, bei 100 s⁻¹ 275 mPas.

Tabelle 1 zeigt die Zusammensetzung und Eigenschaften der Dispersionen der Beispiele 1 bis 7.

Die erfindungsgemäßen Beispiele 1 bis 3 führen zu Dispersionen mit niedriger Viskosität, die auch bei längerer Lagerung nur unwesentlich zunimmt. Tabelle 2 gibt die Werte der Viskosität (in mPas) der in Beispiel 1 hergestellten Dispersion von der Scherrate (in s⁻¹) wieder, unmittelbar nach der Herstellung der Dispersion, nach einem Monat Lagerung und 6 Monaten Lagerung.

Analog verhält sich der mittlere Partikeldurchmesser d₅₀ (Median) der hydrophobierten Siliciumdioxidpartikel. Er beträgt 156 nm unmittelbar nach der Herstellung, 174 nm nach 1 monatiger Lagerung und 194 nm nach 6 monatiger Lagerung.

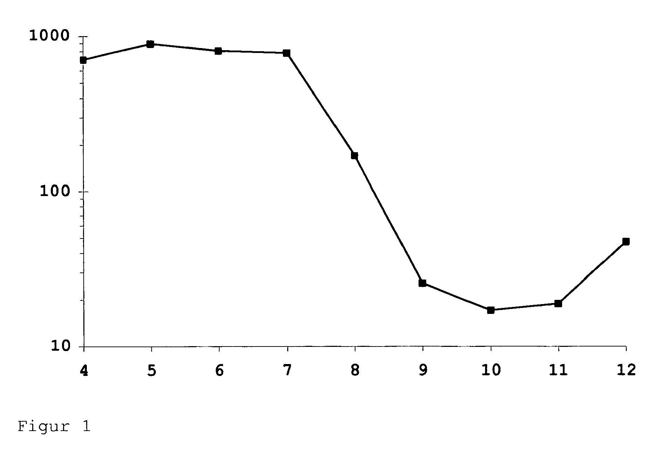

Figur 1 zeigt, dass die Viskosität (in mPas) in Abhängigkeit vom pH-Wert. Im Bereich von 9 bis 11 zeigt die Dispersion eine besonders niedrige Viskosität. Bei pH-Werten kleiner als 9 steigt die Viskosität wieder an. Diese Strukturviskosität führt zu einer Erhöhung der Stabilität einer Dispersion, die beispielsweise noch Füllstoffe und/oder Farbpigmente enthält, da sie deren Absetzen stark reduziert.

**Tabelle 1: Zusammensetzung und Eigenschaften der Dispersionen**

| | | **Gemäß Erfindung** | | | **Vergleich** | | | |
|---|---|---|---|---|---|---|---|---|
| | | **1** | **2** | **3** | **4** | **5** | **6** | **7** |
| AEROSIL^{®} | | R 972 | R 972 | R974 | R202 | R972 | R972 | R972 |
| BET-Oberfläche | m²/g | 110 | 110 | 170 | 100 | 110 | 110 | 110 |
| Methanolbenetzbarkeit | | 45 | 45 | 45 | 75 | 45 | 45 | 45 |
| | g | 12800 | 200,0 | 200,0 | 44,0 | 40,0 | 200,0 | 100,0 |
| VE-Wasser | g | 37340 | 652,0 | 652,0 | 312,5 | 312,5 | 652,0 | 355,7 |
| Hydropalat^{®} 7003 | g | 6360 | 100,0 | 100,0 | 100,0 | - | 100,0 | - |
| DMEA | g | 1270 | 12,0 | 6,0 | 6,0 | 6,0 | 12,0 | 1,61 |
| Tripropylenglycol | g | 630 | 10,0 | 10,0 | 10,0 | 10,0 | - | - |
| Surfynol^{®} 104 E | g | 190 | 3,0 | 3,0 | 3,0 | 3,0 | 3,0 | - |
| BYK^{®} 011 | g | 190 | 3,0 | 3,0 | 3,0 | 3,0 | 3,0 | - |
| N-Methyl-2-pyrrolidon | g | 1910 | 30,0 | 30,0 | 30,0 | 30,0 | 30,0 | - |
| 85:15 C₁₈H₃₇COO-(C₂H₄O)₁₀₀H/ MSA-Copoylmer* | g | - | - | - | - | - | - | 35,20 |
| Tego Foamex^{®} 810 | g | - | - | - | - | - | - | 7,5 |
| pH-Wert | | 10 | 10,2 | - | n.b.** | n.b. | 10,1 | 10 |
| Viskosität 10 s⁻¹ | mPas | 70 | 82 | 1036 | n.b. | n.b. | 69 | 310 |
| Viskosität 100 s⁻¹ | mPas | 60 | 72 | 390 | n.b. | n.b. | 57 | 272 |
| Mittlerer Partikeldurchmesser*** | | | | | | | | |
| Median | µm | 0,096 | 0,224 | n.b. | - | - | 0,562 | - |
| Mean | µm | 0,105 | 0,261 | n.b. | - | - | 38,12 | - |

| | | | | | | | | |
|---|---|---|---|---|---|---|---|---|
| * aus Beispiel 1, EP-A-1026178, Aminoxid enthaltend; ** n.b. = nicht bestimmt; *** bestimmt mit Horiba LA 910 | | | | | | | | |

**Tabelle 2:Viskosität der Dispersion aus Beispiel 1 in Abhängigkeit von Scherrate und Lagerung**

| Nach Herstellung | | 1 Monat Lagerung | | 6 Monate Lagerung | |
|---|---|---|---|---|---|
| Scherrate [1/s] | Viskosität [mPa·s] | Scherrate [1/s] | Viskosität [mPa·s] | Scherrate [1/s] | Viskosität [mPa·s] |
| 0,1 | 80,06 | 0,1 | 128,4 | 0,1 | 166,2 |
| 0,1374 | 79,93 | 0,1374 | 131,7 | 0,1374 | 164,7 |
| 0,2593 | 85,82 | 0,2593 | 129,8 | 0,2593 | 162 |
| 0,3562 | 83,48 | 0,3562 | 127,7 | 0,3562 | 161,2 |
| 0,4894 | 81,39 | 0,4894 | 128,3 | 0,4894 | 158,7 |
| 0,6723 | 79,27 | 0,6723 | 125,7 | 0,6723 | 156,3 |
| 0,9237 | 76,97 | 0,9237 | 124,7 | 0,9237 | 154,2 |
| 1,269 | 75,26 | 1,269 | 122,6 | 1,269 | 151,5 |
| 1,743 | 74,33 | 1,743 | 120 | 1,743 | 148,2 |
| 2,395 | 72,86 | 2,395 | 117,5 | 2,395 | 144,6 |
| 3,29 | 71,39 | 3,29 | 114,7 | 3,29 | 140,6 |
| 11,72 | 69,91 | 11,72 | 111,6 | 11,72 | 136,2 |
| 16,1 | 68,25 | 16,1 | 108,2 | 16,1 | 131,8 |
| 22,12 | 66,54 | 22,12 | 104,8 | 22,12 | 127,5 |
| 30,39 | 64,72 | 30,39 | 101,4 | 30,39 | 123,4 |
| 41,75 | 62,83 | 41,75 | 98,29 | 41,75 | 120,2 |
| 57,36 | 60,96 | 57,36 | 95,47 | 57,36 | 117,7 |
| 108,3 | 59,24 | 108,3 | 93,23 | 108,3 | 116,4 |
| 148,7 | 57,63 | 148,7 | 91,71 | 148,7 | 116,4 |
| 204,3 | 56,27 | 204,3 | 90,96 | 204,3 | 117,5 |
| 280,7 | 55,2 | 280,7 | 90,84 | 280,7 | 119,1 |
| 385,7 | 54,42 | 385,7 | 90,98 | 385,7 | 120,2 |
| 529,9 | 53,88 | 529,8 | 90,9 | 529,9 | 119,9 |
| 727,9 | 53,35 | 727,9 | 90,04 | 727,9 | 117,7 |
| 1.000 | 52,79 | 1.000 | 88,24 | 1.000 | 113,8 |

Das Vergleichsbeispiel 4 zeigt den Einfluss der Methanolbenetzbarkeit der eingesetzten hydrophobierten Siliciumdioxidpartikel. In Vergleichsbeispiel 4 wird AEROSIL^{®} R202 mit einer Methanolbenetzbarkeit von 75 eingesetzt, gegenüber AEROSIL^{®} R972 in den erfindungsgemäßen Beispielen 1 und 2. AEROSIL^{®} R972 und AEROSIL^{®} R974 weisen vergleichbare BET-Oberflächen auf. Dennoch können nur geringe Anteile eingearbeitet werden.

Im Gegensatz hierzu zeigt das erfindungsgemäße Beispiel 3 in dem AEROSIL^{®} R974 mit einer höheren BET-Oberfläche als AEROSIL^{®} R972, aber mit vergleichbarer Methanolbenetzbarkeit auch in hohen Anteilen eingearbeitet werden kann.

Das Vergleichsbeispiel 5 zeigt den Einfluss des Phosphatesters auf die Eigenschaften der erfindungsgemäßen Dispersion. Die hydrophobierten Siliciumdioxidpartikel werden in diesem Falle sehr schlecht benetzt und es resultieren hochviskose. Niedrig gefüllte Dispersionen.

Das Vergleichsbeispiel 6 zeigt den Einfluss des Polyoles auf die Eigenschaften der erfindungsgemäßen Dispersion. Ohne eine ausreichende Menge an Polyol ist eine ausreichende Entschäumung der Dispersion nicht gewährleistet. Bei der Partikelgrößenbestimmung werden Anteile mit großem Durchmesser ermittelt.

Das Vergleichsbeispiel 7 ist DE-A-10316661 entnommen (dort Beispiel 1). Tabelle 1 zeigt, dass die Viskosität dieser Dispersion etwa viermal höher ist als die Viskosität der erfindungsgemäßen Dispersion aus den Beispielen 1 und 2.

Die Auftragung einer Bindemittel und Farbpigmente, gegebenenfalls auch noch inaktive Füllstoffe enthaltenden Zubereitung wird wesentlich vereinfacht, da es nach dem Aufbringen zu keinem Ablaufen der Dispersion "Tropfnasen") kommt. Da unter Scherung, also bei der Verarbeitung eine niedrige Viskosität erreicht wird, kann die Zubereitung sehr gut durch Spritzen oder auch Tauchen verarbeitet werden. Insbesondere beim Tauchen ist eine niedrige Viskosität notwendig um auch in kleinste Hohlräume und Spalte zu fließen.

Nachfolgend werden Beispiele von Bindemittel, Farbpigmenten, und inaktive Füllstoffe enthaltenden Zubereitungen ausgeführt.

**Tabelle 3: Anreiberezepturen A [alle in g]**

| | **AI** | **AII** | **AIII** |
|---|---|---|---|
| AEROSIL^{®} R972 | - | 0,33 | 1,00 |
| Bayhydrol^{®} D270 | 3,76 | 3,76 | 3,76 |
| Wasser | 8,28 | 8,28 | 8,28 |
| DMEA 10 % in Wasser | 0,53 | 0,53 | 0,53 |
| Surfynol^{®} 104E | 0,48 | 0,48 | 0,48 |
| BYK^{®} 011 | 0, 89 | 0,89 | 0, 89 |
| Tronox^{®} R-FD-I | 9,64 | 9,64 | 9, 64 |
| Bayferrox^{®} 303T | 0,11 | 0,11 | 0,11 |
| Blanc fixe micro | 9,7 | 9,7 | 9,7 |
| Talkum, IT extra | 2,37 | 2,37 | 2,37 |
| Summe | 35,76 | 36,09 | 36,76 |

| | | | |
|---|---|---|---|
| Bayhydrol^{®} D 270, wasserverdünnbares Polyester-Harz Bayer AG; Tronox^{®} R-FD-I, Titandioxid Kerr McGee Pigments GmbH & Co.KG), Bayferrox^{®} 303 T, Eisenoxidschwarz, Bayer AG; Blanc fixe Micro, Bariumsulfat, Sachtleben GmbH; Micro Talc IT Extra, Talkum, Norwegian Talc; BYK^{®} 011, silikonfreier Entschäumer, Fa. Byk Chemie; Surfynol^{®} 104E, 2,4,7,9-Tetramethyldec-5-in-4,7-diol, Fa. Air Products | | | |

**Tabelle 4: Additivzusammensetzung B (alle in g)**

| | |
|---|---|
| Hydropalat 7003 | 60,25 |
| N-Methylpyrrolidon | 18,07 |
| DMEA | 12,05 |
| Tripropylenglycol | 6,01 |
| BYK 011 | 1,81 |
| Surfynol E104 | 1,81 |
| **Summe** | **100** |

**Tabelle 5: Harze C und D (alle in g)**

| | **C** | **D** |
|---|---|---|
| Bayhydrol D270 | 6,76 | 7,86 |
| Bayhytherm 3146* | 32,51 | 37,80 |
| Bayhytherm VP LS 2153 | 37,36 | 43,45 |
| Cymel 327* | 7,65 | 8,90 |
| BYK 346* | 0,88 | 1,02 |
| DMEA 10 % in Wasser | 2,95 | 0,98 |
| Wasser | 11,90 | - |
| **Summe** | **100** | **100** |

| | | |
|---|---|---|
| *: Bayhytherm 3146 aliphatisches, selbstvernetzendes Urethanharz, Bayer AG; Cymel^{®} 327, Melaminharz, Dyno Cytec; Byk^{®} 346, Polyether modifizierte Dimethylpolysiloxan-Lösung | | |

**Tabelle 6: Zubereitung basierend auf Harz C**

| | | **Vergleich** | | | | | **Gemäß Erfindung** | |
|---|---|---|---|---|---|---|---|---|
| | | **C0** | **C1** | **C2** | **C3** | **C4** | **C5** | **C6** |
| D1 | g | - | - | - | | | 1,62 | 4, 90 |
| AI | g | 35,76 | - | - | | | 35,76 | 35,76 |
| AII | g | - | 36, 09 | - | | | - | - |
| AIII | g | - | - | 36,76 | | | - | - |
| Borchi Gel PW 25* | g | | | | 0,33 | 1,00 | | |
| B | g | 0,78 | 0,78 | 0,78 | 0,78 | 0,78 | 0,64 | - |
| Harz | g | 57,48 | 57,48 | 57,48 | 57,48 | 57,48 | 57,48 | 57,48 |
| Wasser | g | 5,97 | 5,64 | 4,97 | 5,64 | 4,97 | 4,49 | 1,86 |
| Summe | g | 100,00 | 100,00 | 100,00 | 100,00 | 100,00 | 100,00 | 100,00 |
| Festkörper | Gew.-% | 49 | 49 | 49 | 49 | 49 | 49 | 49 |
| Hydrophobes SiO₂ | Gew.-% | 0 | 0,33 | 1 | 0,33 | 1 | 0,33 | 1 |

| | | | | | | | | |
|---|---|---|---|---|---|---|---|---|
| Borchi^{®} Gel PW 25, Fa. Borchers : Strukturviskoser Verdicker zur Einstellung der Viskosität im niedrigen und mittleren Schersegment; | | | | | | | | |

**Tabelle 7: Zubereitung basierend auf Harz D**

| | | **Vergleich** | | | **Gemäß Erfindung** | |
|---|---|---|---|---|---|---|
| | | **D0** | **D1** | **D2** | **D3** | **D4** |
| D1 | g | - | - | | 4, 9 | 9,8 |
| AI | g | 35,76 | - | | 35,76 | 35,76 |
| AII | g | - | - | | - | - |
| AIII | g | - | 36,76 | | - | - |
| Borchi Gel PW 25 | g | | | 1 | | |
| B | g | 0,81 | 0,81 | 0,81 | - | - |
| Harz | g | 59,34 | 59,34 | 59,34 | 59,34 | 59,34 |
| Wasser | g | 4,09 | 3,09 | 3,09 | - | - |
| Summe | g | 100,00 | 100,00 | 100,00 | 100,00 | 104,9 |
| Festkörper | Gew.-% | 54 | 55 | 55 | 55 | 53 |
| Hydrophobes SiO₂ | Gew.-% | 0 | 1 | 1 | 1 | 2 |

### Herstellung und Prüfung der Zubereitungen (Lacke)

Vordispergierung: Reibgut mit Dissolver 5 min mischen Dispergierung: Reibgut mit Dispermat SL 603, 100 ml 1 mm Glasperlen, bei 3000 U pro min., bis Grindometer <10 µm dispergieren.

Auflacken: Unter Rühren wird bei Vorlage des Reibgutes das Auflackgemisch, Additivgemisch und Wasser hinzugegeben. Mit Dissolver 5 min homogenisieren

Viskosität der Lacke:
- Lacke: Fließkurven und Sprungversuche
- Fließkurve:
   Vorscheren = 50 s⁻¹ (30 s)
   Ruhen (600 s)
   Messung = 0,1 s⁻¹ bis 500 s⁻¹ (150 s)
- Sprungversuch:
   120 s bei = 500 s⁻¹
   300 s bei = 0,5 s⁻¹

Applikation: Mit Aufzugautomat Erichsen 18 mm/s und Ablaufrakel auf Glasplatten. Glasplatten wurden für die Dauer von 3 min senkrecht gestellt, danach wurde das Ablaufen beurteilt.

Absetzverhalten: Die Proben wurden 4 Wochen bei 20°C und 40°C gelagert und anschließend wurde die Sedimenthöhe mit einem Lineal ausgemessen. Daraus wurde das prozentuale Verhältnis zwischen Sediment und überstehender Phase berechnet und als Ergebnis angegeben.

### Ergebnisse

**Tabelle 8: Zubereitung basierend auf Harz C**

| | **Vergleich** | | | | | **Gemäß Erfindung** | |
|---|---|---|---|---|---|---|---|
| | **C0** | **C1** | **C2** | **C3** | **C4** | **C5** | **C6** |
| **pH Wert** | 8, 64 | 8,69 | 8,61 | 8,64 | 8,68 | 8,68 | 8,64 |
| **Auslaufzeit*** | 17 | 20 | 26 | 120 | 20 | 20 | 22 |

| | | | | | | | |
|---|---|---|---|---|---|---|---|
| * DIN 4 Becher in s | | | | | | | |

**Tabelle 9: Zubereitung basierend auf Harz D**

| | **Vergleich** | | | **Gemäß Erfindung** | |
|---|---|---|---|---|---|
| | **D0** | **D1** | **D2** | **D3** | **D4** |
| **pH Wert** | 8,29 | 8,24 | 8,27 | 8,26 | 8,47 |

**Absetzverhalten :** Hier wird die überstehende Phase im prozentualen Verhältnis zum Gesamtfüllstand des Lackes angegeben, ein kleiner Wert bedeutet ein besseres Schwebeverhalten bzw. Antiabsetzverhalten.

**Tabelle 10:Absetzverhalten,Zubereitung basierend auf Harz C**

| | **Vergleich** | | | | | **Gemäß Erfindung** | |
|---|---|---|---|---|---|---|---|
| | **C0** | **C1** | **C2** | **C3** | **C4** | **C5** | **C6** |
| **Bei 20°C** | 66 | 53 | 34 | 58 | 29 | 56 | 49 |
| **Bei 40°C** | 68 | 56 | 39 | 64 | 54 | 62 | 40 |

**Tabelle 11:Absetzverhalten, Zubereitung basierend auf Harz D**

| | **Vergleich** | | | **Gemäß Erfindung** | |
|---|---|---|---|---|---|
| | **D0** | **D1** | **D2** | **D3** | **D4** |
| **Bei 20°C** | 23 | 5 | 5 | 21 | 1 |
| **Bei 40°C** | 35 | 5 | 32 | 23 | 1 |

| | | | | | |
|---|---|---|---|---|---|
| Werte für Tabelle 10 und 11 in % | | | | | |

**Ablaufverhalten:** Beurteilt wurde die Läufergrenze bei der die sich keine Läufer mehr bis zum nächst dickeren Streifen hineinziehen.

**Tabelle 12: Maximale Schichtdicke in µm**

| | | **Vergleich** | | | **Gemäß Erfindung** |
|---|---|---|---|---|---|
| | | **C0** | **C2** | **C4** | **C6** |
| Maximale Schichtdicke | µm | 100 | 125 | 225 | 175 |

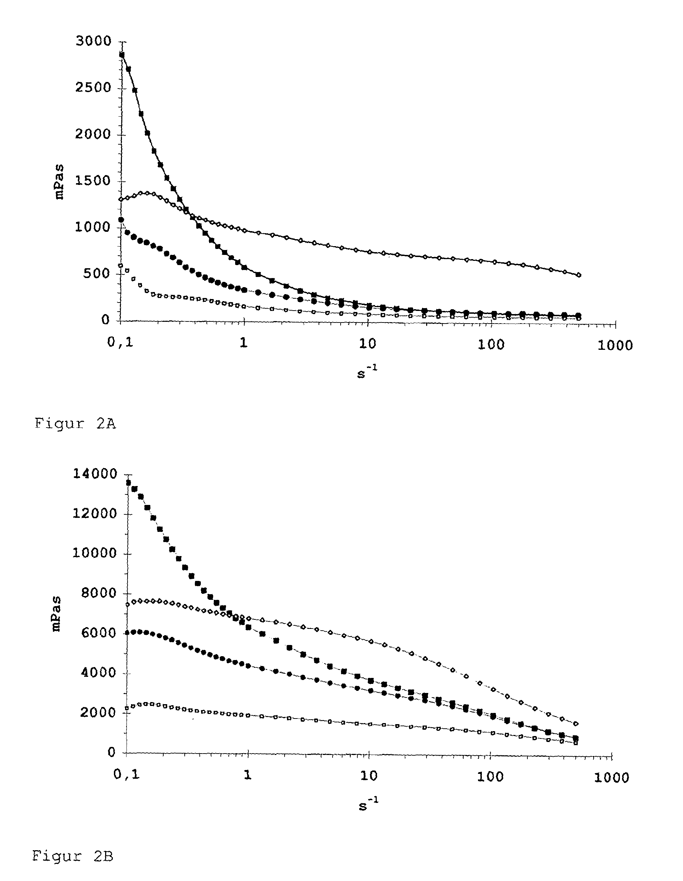

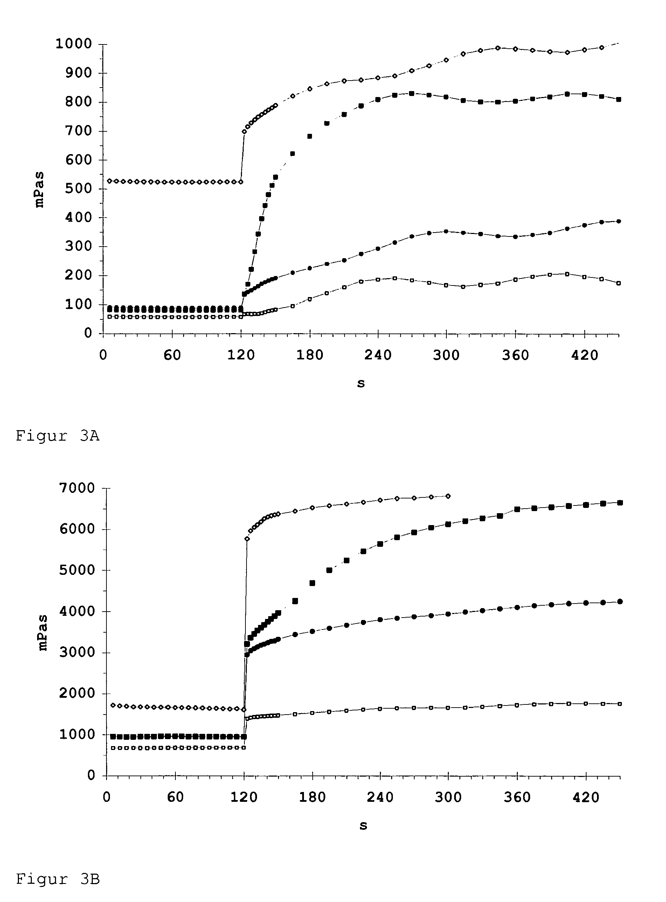

Die Figuren 2 und 3 zeigen die Fließ- und Sprungkurven von Zubereitungen (Lacken) basierend auf den Harzen C und D. Dabei gilt für Figur 2A und Figur 2B:
□ = Lack C0, ● = Lack C2, ◇ = Lack C4, ■ = Lack C6.

Für Figur 3A und Figur 3B gilt:
□ = Lack D0, ● = Lack D1, ◇ = Lack D2, ■ = Lack D3,

Aus den in Figur 2A und 2B gezeigten Fließkurven ist deutlich zu entnehmen, dass die Zubereitungen auf Basis der Dispersion mit 1 Gew.-% AEROSIL^{®} R 972 eine ausgeprägte Strukturviskosität verursachen. Diese ermöglicht bei niedrigen Scherraten eine sehr gute Stabilisierung von Pigmenten und inaktiven Füllstoffen. Die Zubereitung auf Basis von 1 Gew.-% Borchi Gel verursacht zwar auch eine höhere Viskosität, die jedoch bei höherer Scherung nur wenig abnimmt. Eine niedrige Viskosität wird jedoch beim Tauchen, Rollen, Spritzen bevorzugt um alle Bereiche der zu behandelnden Oberfläche zu erreichen.

Durch hohe Viskositäten bei niedrigen Scherraten kann auch eine dickere Schicht erreicht werden, ohne dass das Material wieder abläuft/abtropft.

Dagegen weist die Zubereitung auf Basis von 1 Gew.-% AEROSIL^{®} R 972 Pulver nicht dieses Verhalten auf.

Die in den Figuren 3A und 3B gezeigten Sprungkurven, sollen zeigen, wie schnell sich die mit den Fließkurven ermittelte Viskosität bei schneller Veränderung der Scherrate wieder einstellt. Bei idealer Strukturviskosität sollte die Viskosität, sobald die Scherrate sinkt, sofort ansteigen und einen konstanten Wert aufweisen.

Der etwas verzögerte Aufbau der Viskosität ist gewünscht, da er hilft einen besseren Verlauf des Lackes/Farbe zu erzielen.

Aus den Sprungkurven kann entnommen werden, dass es bei der Zubereitung auf Basis einer Dispersion mit 1 Gel.-% AEROSIL^{®} R 972 es schnell wieder zu einer Viskositätserhöhung kommt.

## Patentansprüche

1. Wässerige Dispersion, welche hydrophobierte Siliciumdioxidpartikel und jeweils ein oder mehrere Dispergieradditive, eine basisch wirkende Zusammensetzung enthält und die frei von Farbpigmenten, inaktiven Füllstoffen und Bindemitteln ist, **dadurch gekennzeichnet, dass**
- die hydrophobierten Siliciumdioxidpartikel eine Methanolbenetzbarkeit von 30 bis 60 aufweisen und mit einem Anteil von 0,1 bis 50 Gew.-% in der Dispersion vorliegen,
- der Anteil an Wasser 30 bis 90 Gew.-%, bezogen auf die Dispersion, beträgt,
- das Dispergieradditiv wenigstens ein Phosphatester eines ethoxylierten Alkoholes mit 8 bis 18 Kohlenstoffatomen ist, dessen Anteil 3 bis 25 Gew.-%, bezogen auf den Anteil der hydrophobierten Siliciumdioxidpartikeln beträgt,
- die basisch wirkende Zusammensetzung ein oder mehrere Amine der allgemeinen Formel RNH₂, R₂NH und R₃N enthält oder aus diesen besteht, wobei R für eine Alkylgruppe oder eine hydroxylsubstituierte Alkylgruppe mit jeweils 2 bis 10 Kohlenstoffatomen steht und mit einem Anteil von 5 bis 30 Gew.-%, bezogen auf den Anteil an hydrophobierten Siliciumdioxidpartikeln, vorliegt,
- die Dispersion weiterhin ein oder mehrere Polyole mit 2 bis 15 Kohlenstoffatomen enthält, deren Anteil 1 bis 10 Gew.-%, bezogen auf den Anteil an hydrophobierten Siliciumdioxidpartikeln, beträgt,
- wobei der Phosphatester, die basisch wirkende Zusammensetzung und das Polyol in der wässerigen Phase der Dispersion löslich sind und
- der pH-Wert der Dispersion 9 bis 11 beträgt.

2. Wässerige Dispersion nach Anspruch 1, **dadurch gekennzeichnet, dass** die Methanolbenetzbarkeit 35 bis 55 ist.

3. Wässerige Dispersion nach den Ansprüchen 1 oder 2 **dadurch gekennzeichnet, dass** die hydrophobierten Siliciumdioxidpartikel pyrogener Herkunft sind.

4. Wässerige Dispersion nach den Ansprüchen 1 bis 3, **dadurch gekennzeichnet, dass** die mittlere Partikelgröße (Medianwert) der hydrophobierten Siliciumdioxidpartikel 200 nm oder weniger ist.

5. Wässerige Dispersion nach den Ansprüchen 1 bis 4, **dadurch gekennzeichnet, dass** der Phosphatester ein mono-, di- und/oder trisubstituierter Phosphatester eines ethoxylierten, primären Alkoholes mit einer, zwei oder drei linearen C₁₂-C₁₄-Kohlenstoffketten ist.

6. Wässerige Dispersion nach den Ansprüchen 1 bis 5, **dadurch gekennzeichnet, dass** sie N,N-Dimethylethanolamin enthält.

7. Wässerige Dispersion nach den Ansprüchen 1 bis 6, **dadurch gekennzeichnet, dass** sie Tripropylenglykol, 2,4,7,9-Tetramethyldec-5-in-4,7-diol oder eine Mischung der beiden enthält.

8. Wässerige Dispersion nach den Ansprüchen 1 bis 7, **dadurch gekennzeichnet, dass** sie N-Methyl-2-pyrrolidon enthält.

9. Wässerige Dispersion nach den Ansprüchen 1 bis 8, **dadurch gekennzeichnet, dass** sie zusätzlich ein oder mehrere Entschäumungsmittel enthält.

10. Wässerige Dispersion nach Anspruch 1, **dadurch gekennzeichnet, dass** sie
- einen pH-Wert von 9 bis 11 aufweist und
- 10 bis 30 Gew.-%, bezogen auf die Dispersion, hydrophobe Siliciumdioxidpartikel
• mit einer Methanolbenetzbarkeit von 40 bis 50,
• mit einer BET-Oberfläche von 90 bis 150 m2/g,
- 9 bis 16 Gew.-% bezogen auf den Anteil an hydrophobierten Siliciumdioxidpartikeln, eines mono-, di- und/oder trisubstituierten Phosphatesters eines ethoxylierten, primären Alkoholes mit einer, zwei oder drei linearen C₁₂-C₁₄-Kohlenstoffketten,
- 5 bis 20 Gew.-%, bezogen auf den Anteil an hydrophobierten Siliciumdioxidpartikeln, N,N-Dimethylethanolamin,
- 10 bis 20 Gew.-%, bezogen auf den Anteil an hydrophobierten Siliciumdioxidpartikeln, 1-Methyl-2-pyrrolidon,
- 3 bis 7 Gew.-% Tripropylenglykol und 0,5 bis 1,5 Gew.-% 2,4,7,9-Tetramethyldec-5-in-4,7-diol, jeweils bezogen auf den Anteil an hydrophobierten Siliciumdioxidpartikeln,
- 1 bis 3 Gew.-%, bezogen auf den Anteil an hydrophobierten Siliciumdioxidpartikeln, eines oder mehrerer Entschäumungsmittel
- und 40 bis 70 Gew.-% Wasser, bezogen auf die Dispersion, enthält.

11. Zubereitung, welche hydrophobierte Siliciumdioxidpartikel, ein oder mehrere Bindemittel, ein oder mehrere Dispergieradditive und eine basisch wirkende Zusammensetzung enthält, **dadurch gekennzeichnet, dass**
- die hydrophobierten Siliciumdioxidpartikel eine Methanolbenetzbarkeit von 30 bis 60 aufweisen und mit einem Anteil von 0,05 bis 5 Gew.-% in der Zubereitung vorliegen,
- das Dispergieradditiv wenigstens ein Phosphatester eines ethoxylierten Alkoholes mit 8 bis 18 Kohlenstoffatomen ist, dessen Anteil 3 bis 25 Gew.-%, bezogen auf den Anteil der hydrophobierten Siliciumdioxidpartikeln beträgt,
- die basisch wirkende Zusammensetzung ein oder mehrere Amine der allgemeinen Formel RNH₂, R₂NH und R₃N enthält oder aus diesen besteht, wobei R für eine Alkylgruppe oder eine hydroxylsubstituierte Alkylgruppe mit jeweils 2 bis 10 Kohlenstoffatomen steht und mit einem Anteil von 5 bis 30 Gew.-%, bezogen auf den Anteil an hydrophobierten Siliciumdioxidpartikeln, vorliegt,
- die Dispersion weiterhin ein oder mehrere Polyole mit 2 bis 15 Kohlenstoffatomen enthält, deren Anteil 1 bis 10 Gew.-%, bezogen auf den Anteil an hydrophobierten Siliciumdioxidpartikeln, beträgt, und
- der pH-Wert der Zubereitung kleiner als 9 ist.

12. Zubereitung nach Anspruch 11, **dadurch gekennzeichnet, dass** sie weiterhin Farbpigmente und/oder inaktive Füllstoffe enthält.

13. Verfahren zur Herstellung der Zubereitung gemäß der Ansprüche 11 oder 12, **dadurch gekennzeichnet, dass** man die wässerige Dispersion gemäß der Ansprüche 1 bis 10 einsetzt.

14. Verwendung der wässerigen Dispersion gemäß der Ansprüche 1 bis 10 oder der Zubereitung gemäß der Ansprüche 11 oder 12 als Zusatz zu Hydrofüllern in der Automobilindustrie, als Beschichtungsbestandteil in Can- und Coil-coating-Verfahren, als Additiv in wasserbasierenden UV-härtbaren Formulierungen.

## Claims

1. Aqueous dispersion which comprises hydrophobized silicon dioxide particles and in each case one or more dispersing additives, a basic composition, and which is free of colour pigments, inactive fillers and binders, **characterized in that**
- the hydrophobized silicon dioxide particles have a methanol wettability of 30 to 60 and are present in the dispersion with a proportion of 0.1 to 50% by weight,
- the proportion of water is 30 to 90% by weight based on the dispersion,
- the dispersing additive is at least one phosphate ester of an ethoxylated alcohol having 8 to 18 carbon atoms, the proportion of which is 3 to 25% by weight based on the proportion of the hydrophobized silicon dioxide particles,
- the basic composition comprises or consists of one or more amines of the general formula RNH₂, R₂NH and R₃N, where R is an alkyl group or a hydroxyl-substituted alkyl group having in each case 2 to 10 carbon atoms, and is present with a proportion of 5 to 30% by weight based on the proportion of hydrophobized silicon dioxide particles,
- the dispersion further comprises one or more polyols having 2 to 15 carbon atoms, the proportion of which is 1 to 10% by weight based on the proportion of hydrophobized silicon dioxide particles,
- the phosphate ester, the basic composition and the polyol being soluble in the aqueous phase of the dispersion and
- the pH of the dispersion being 9 to 11.

2. Aqueous dispersion according to Claim 1, **characterized in that** the methanol wettability is 35 to 55.

3. Aqueous dispersion according to Claims 1 and 2, **characterized in that** the hydrophobized silicon dioxide particles originate from a fuming process.

4. Aqueous dispersion according to Claims 1 to 3, **characterized in that** the mean particle size (median) of the hydrophobized silicon dioxide particles is 200 nm or less.

5. Aqueous dispersion according to Claims 1 to 4, **characterized in that** the phosphate ester is a mono-, di- and/or trisubstituted phosphate ester of an ethoxylated primary alcohol with one, two or three linear C₁₂-C₁₄ carbon chains.

6. Aqueous dispersion according to Claims 1 to 5, **characterized in that** it comprises N,N-dimethylethanolamine.

7. Aqueous dispersion according to Claims 1 to 6, **characterized in that** it comprises tripropylene glycol, 2,4,7,9-tetramethyldec-5-yne-4,7-diol or a mixture of the two.

8. Aqueous dispersion according to Claims 1 to 7, **characterized in that** it comprises N-methyl-2-pyrrolidone.

9. Aqueous dispersion according to Claims 1 to 8, **characterized in that** it additionally comprises one or more defoamers.

10. Aqueous dispersion according to Claim 1, **characterized in that** it
- has a pH of 9 to 11 and
- contains 10 to 30% by weight, based on the dispersion, of hydrophobic silicon dioxide particles
• with a methanol wettability of 40 to 50,
• with a BET surface area of 90 to 150 m²/g,
- 9 to 16% by weight, based on the proportion of hydrophobized silicon dioxide particles, of a mono-, di- and/or trisubstituted phosphate ester of an ethoxylated primary alcohol having one, two or three linear C₁₂-C₁₄ carbon chains,
- 5 to 20% by weight, based on the proportion of hydrophobized silicon dioxide particles, of N,N-dimethylethanolamine,
- 10 to 20% by weight, based on the proportion of hydrophobized silicon dioxide particles, of 1-methyl-2-pyrrolidone,
- 3 to 7% by weight of tripropylene glycol and 0.5 to 1.5% by weight of 2,4,7,9-tetramethyldec-5-yne-4,7-diol, based in each case on the proportion of hydrophobized silicon dioxide particles,
- 1 to 3% by weight, based on the proportion of hydrophobized silicon dioxide particles, of one or more defoamers
- and 40 to 70% by weight of water, based on the dispersion.

11. Formulation which comprises hydrophobized silicon dioxide particles, one or more binders, one or more dispersing additives and a basic composition, **characterized in that**
- the hydrophobized silicon dioxide particles have a methanol wettability of 30 to 60 and are present in the formulation with a proportion of 0.05 to 5% by weight,
- the dispersing additive is at least one phosphate ester of an ethoxylated alcohol having 8 to 18 carbon atoms, the proportion of which is 3 to 25% by weight based on the proportion of the hydrophobized silicon dioxide particles,
- the basic composition comprises or consists of one or more amines of the general formula RNH₂, R₂NH and R₃N, where R is an alkyl group or a hydroxyl-substituted alkyl group having in each case 2 to 10 carbon atoms, and is present with a proportion of 5 to 30% by weight based on the proportion of hydrophobized silicon dioxide particles,
- the dispersion further comprises one or more polyols having 2 to 15 carbon atoms, the proportion of which is 1 to 10% by weight based on the proportion of hydrophobized silicon dioxide particles, and
- the pH of the formulation being less than 9.

12. Formulation according to Claim 11, **characterized in that** it further comprises colour pigments and/or inactive fillers.

13. Process for preparing the formulation according to Claims 11 and 12, **characterized in that** the aqueous dispersion according to Claims 1 to 10 is used.

14. Use of the aqueous dispersion according to Claims 1 to 10 or of the formulation according to Claims 11 and 12 as an additive to waterborne surfacers in the automobile industry, as a coating constituent in can- and coil-coating processes, as an additive in water-based UV-curable formulations.

## Revendications

1. Dispersion aqueuse qui contient des particules hydrofugées de dioxyde de silicium et à chaque fois un ou plusieurs additifs de dispersion, une composition à effet basique et qui est exempte de pigments colorés, de charges inactives et de liants, **caractérisée en ce que**
- les particules hydrofugées de dioxyde de silicium présentent une mouillabilité par le méthanol de 30 à 60 et se trouvent en une proportion de 0,1 à 50% en poids dans la dispersion,
- la proportion d'eau est de 30 à 90% en poids, par rapport à la dispersion,
- l'additif de dispersion est au moins un ester de phosphate d'un alcool éthoxylé comprenant 8 à 18 atomes de carbone, dont la proportion représente 3 à 25% en poids, par rapport à la proportion de particules hydrofugées de dioxyde de silicium,
- la composition à effet basique contient ou est constituée par une ou plusieurs amines de formule générale RNH₂, R₂NH et R₃N, R représentant un groupe alkyle ou un groupe alkyle substitué par hydroxyle comprenant à chaque fois 2 à 10 atomes de carbone et se trouvant en une proportion de 5 à 30% en poids, par rapport à la proportion de particules hydrofugées de dioxyde de silicium,
- la dispersion contient en outre un ou plusieurs polyols comprenant 2 à 15 atomes de carbone, dont la proportion est de 1 à 10% en poids, par rapport à la proportion de particules hydrofugées de dioxyde de silicium,
- l'ester de phosphate, la composition à effet basique et le polyol étant solubles dans la phase aqueuse de la dispersion et
- le pH de la dispersion valant 9 à 11.

2. Dispersion aqueuse selon la revendication 1, **caractérisée en ce que** la mouillabilité par le méthanol est de 35 à 55.

3. Dispersion aqueuse selon les revendications 1 ou 2, **caractérisée en ce que** les particules hydrofugées de dioxyde de silicium sont d'origine pyrogène.

4. Dispersion aqueuse selon les revendications 1 à 3, **caractérisée en ce que** la grosseur moyenne (valeur médiane) des particules hydrofugées de dioxyde de silicium est de 200 nm ou moins.

5. Dispersion aqueuse selon les revendications 1 à 4, **caractérisée en ce que** l'ester de phosphate est un ester de phosphate monosubstitué, disubstitué et/ou trisubstitué d'un alcool primaire éthoxylé comprenant une, deux ou trois chaînes carbonées en C₁₂-C₁₄ linéaires.

6. Dispersion aqueuse selon les revendications 1 à 5, **caractérisée en ce qu'**elle contient de la N,N-diméthyléthanolamine.

7. Dispersion aqueuse selon les revendications 1 à 6, **caractérisée en ce qu'**elle contient du tripropylèneglycol, du 2,4,7,9-tétraméthyldéc-5-yne-4,7-diol ou un mélange des deux.

8. Dispersion aqueuse selon les revendications 1 à 7, **caractérisée en ce qu'**elle contient de la N-méthyl-2-pyrrolidone.

9. Dispersion aqueuse selon les revendications 1 à 8, **caractérisée en ce qu'**elle contient en outre un ou plusieurs antimousses.

10. Dispersion aqueuse selon la revendication 1, **caractérisée en ce qu'**elle
- présente un pH de 9 à 11 et contient
- 10 à 30% en poids, par rapport à la dispersion, de particules hydrophobes de dioxyde de silicium
- présentant une mouillabilité par le méthanol de 40 à 50,
- présentant une surface BET de 90 à 150 m²/g,
- 9 à 16% en poids, par rapport à la proportion de particules hydrofugées de dioxyde de silicium, d'un ester de phosphate monosubstitué, disubstitué et/ou trisubstitué d'un alcool primaire éthoxylé comprenant une, deux ou trois chaînes carbonées en C₁₂-C₁₄ linéaires,
- 5 à 20% en poids, par rapport à la proportion de particules hydrofugées de dioxyde de silicium, de N,N-diméthyléthanolamine,
- 10 à 20% en poids, par rapport à la proportion de particules hydrofugées de dioxyde de silicium, de 1-méthyl-2-pyrrolidone,
- 3 à 7% en poids de tripropylèneglycol et 0,5 à 1,5% en poids de 2,4,7,9-tétraméthyldéc-5-yne-4,7-diol, chacun par rapport à la proportion de particules hydrofugées de dioxyde de silicium,
- 1 à 3% en poids, par rapport à la proportion de particules hydrofugées de dioxyde de silicium, d'un ou de plusieurs antimousses,
- et 40 à 70% en poids d'eau, par rapport à la dispersion.

11. Composition, qui contient des particules hydrofugées de dioxyde de silicium, un ou plusieurs liants, un ou plusieurs additifs de dispersion et une composition à effet basique, **caractérisée en ce que**
- les particules hydrofugées de dioxyde de silicium présentent une mouillabilité par le méthanol de 30 à 60 et se trouvent en une proportion de 0,05 à 5% en poids dans la composition,
- l'additif de dispersion est au moins un ester de phosphate d'un alcool éthoxylé comprenant 8 à 18 atomes de carbone, dont la proportion représente 3 à 25% en poids, par rapport à la proportion de particules hydrofugées de dioxyde de silicium,
- la composition à effet basique contient ou est constituée par une ou plusieurs amines de formule générale RNH₂, R₂NH et R₃N, R représentant un groupe alkyle ou un groupe alkyle substitué par hydroxyle comprenant à chaque fois 2 à 10 atomes de carbone et se trouvant en une proportion de 5 à 30% en poids, par rapport à la proportion de particules hydrofugées de dioxyde de silicium,
- la dispersion contient en outre un ou plusieurs polyols comprenant 2 à 15 atomes de carbone, dont la proportion est de 1 à 10% en poids, par rapport à la proportion de particules hydrofugées de dioxyde de silicium, et
- le pH de la composition est inférieur à 9.

12. Composition selon la revendication 11, **caractérisée en ce qu'**elle contient en outre des pigments colorés et/ou des charges inactives.

13. Procédé pour la préparation de la composition selon les revendications 11 ou 12, **caractérisé en ce qu'**on utilise la dispersion aqueuse selon les revendications 1 à 10.

14. Utilisation de la dispersion aqueuse selon les revendications 1 à 10 ou de la composition selon les revendications 11 ou 12 comme additif pour des apprêts hydrofuges dans l'industrie automobile, comme constituant de revêtement dans le procédé de revêtement de boîtes et de bobines, comme additifs dans des formulations à base d'eau, durcissables par des UV.
